Europäisches Patentamt

European Patent Office

Office européen des brevets

(11) Veröffentlichungsnummer: **0 059 492**
**A1**

## (12) EUROPÄISCHE PATENTANMELDUNG

(21) Anmeldenummer: 82200128.5

(22) Anmeldetag: 02.02.82

(51) Int. Cl.³: **F 24 J 3/02**
**C 25 D 11/18**

(30) Priorität: 28.02.81 DE 3107680

(43) Veröffentlichungstag der Anmeldung:
08.09.82 Patentblatt 82/36

(84) Benannte Vertragsstaaten:
AT BE CH DE FR GB IT LI LU NL SE

(71) Anmelder: VEREINIGTE DEUTSCHE METALLWERKE
AG
Zeilweg
D-6000 Frankfurt am Main 50(DE)

(72) Erfinder: Sattler, Hans-Peter, Dr. Dipl.-Ing.
Ferdinandstrasse 22
D-6283 Bad Homburg(DE)

(54) Solarabsorber.

(57) Die Erfindung bezieht sich auf einen Solarabsorber mit selektiv absorbierender Oberflächenschicht, sowie auf ein Herstellungsverfahren hierfür.

Selektiv absorbierende Oberflächenschichten werden auf Solarabsorbern angebracht, um deren Wirkungsgrad zu verbessern. Es sind verschiedene derartige Schichten bekanntgeworden, wobei es bisher jedoch noch nicht gelungen ist, mit vertretbarem Aufwand gleichzeitig hohe selektive Absorption und gute Korrosionsbeständigkeit zu realisieren. Es besteht somit die Aufgabe, für selektiv absorbierende Oberflächenschichten von Solarabsorbern einen wirksamen Korrosionsschutz zu schaffen, ohne dabei deren Wirksamkeit zu beeinträchtigen.

Zur Lösung dieses Problems wird erfindungsgemäß vorgeschlagen, auf einer selektiv absorbierenden Oberflächenschicht eine Korrosions-Schutzschicht aus Polytetrafluoräthylen (PTFE) aufzubringen, vorzugsweise in einer Dicke von 1 bis 6 µm.

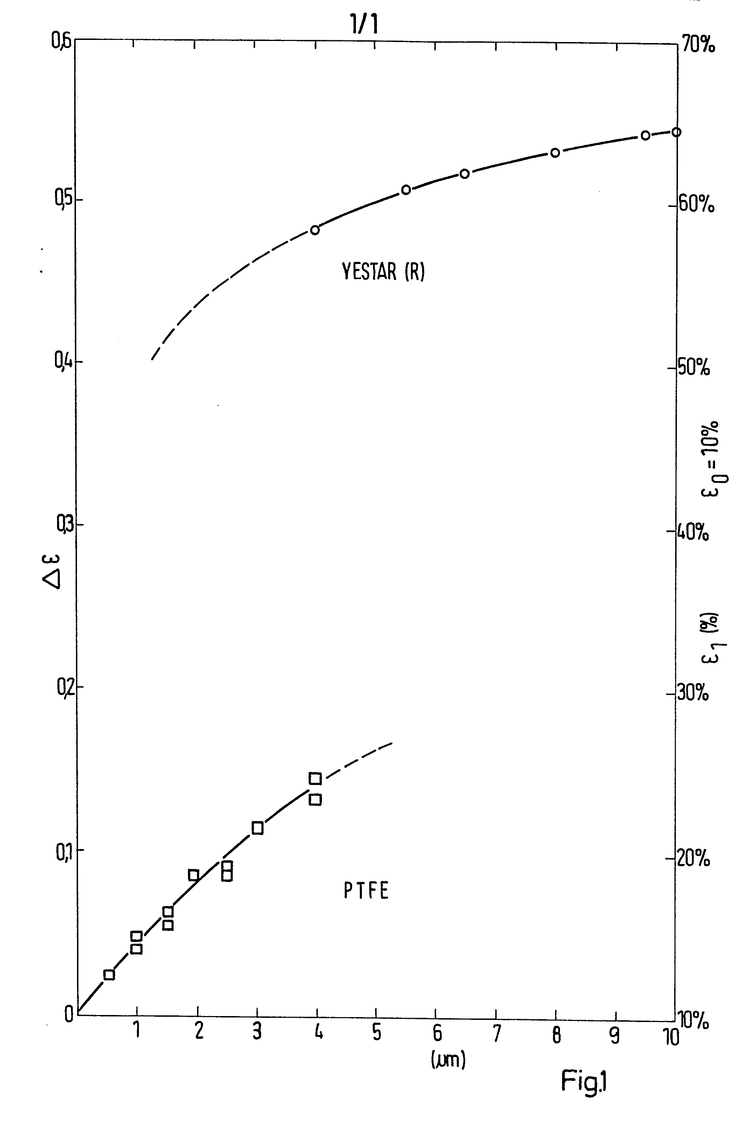

In Figur 1 ist dargestellt, wie sich der Emissionskoeffizient $\epsilon$ mit zunehmender Dicke der Schutzschicht verändert. Es sind die Werte für PTFE und Vestar (R) einem für ähnliche Anwendungsfälle bekannten Produkt, eingetragen. PTFE ist bei gleicher Schichtdicke nicht nur wesentlich günstiger als Vestar (R), es läßt sich auch leicht in geringerer Schichtdicke aufbringen, so daß bei Anwendung der erfindungsgemäßen Korrosions-Schutzschicht keine nennenswerte Verschlechterung des Emissionskoeffizienten in Kauf genommen werden muß.

./...

Fig.1

METALLGESELLSCHAFT AG        Ffm., 23.02.1981
Reuterweg 14                 MLK/OKU

6000 Frankfurt/Main 1


Prov.Nr. 8674 M


SOLARABSORBER


Die Erfindung bezieht sich auf einen Solarabsorber
mit selektiv absorbierender Oberflächenschicht sowie
auf ein Herstellungsverfahren hierfür.


Durch selektiv absorbierende Oberflächenschichten auf
Solarabsorbern wird deren Wirkungsgrad verbessert. Aus
der DE-AS 26 16 662 ist ein Verfahren zur Herstellung
einer selektiv absorbierenden Oberflächenschicht auf
einem Grundkörper aus Aluminium bekanntgeworden, wonach
auf dem Aluminiumgrundkörper zunächst mittels eines
Anodisierungsverfahrens eine dünne Oxidschicht mit einem
gleichmäßig auf der Oberfläche verteilten Porenraster
erzeugt wird und in diesen Poren mittels eines galvanischen Verfahrens metallische Stäbchen erzeugt werden.
Im Vergleichsversuch mit einer einfachen Schwarzlackierung
bzw. einer teilselektiven Schicht, haben sich für eine
nach diesem Verfahren hergestellte Oberflächenschicht
die Werte gemäß Tabelle 1 ergeben, wobei die Wirkungsgrade im Labortest bei Windstille, einer Umgebungstemperatur von 20°C und einer Temperatur des Solarabsorbers
von 100°C ermittelt wurden.


- 2 -

TABELLE 1

| Schicht | Absorptions-koeffizient $\alpha$ | Emissions-koeffizient $\varepsilon$ | Wirkungs-grad $\eta$ |
|---|---|---|---|
| Schwarzlack | 92 - 98 % | ca. 90 % | $\sim$26 % |
| Teilselektiv | 90 - 97 % | ca. 50 % | $\sim$45 % |
| Selektiv | 90 - 97 % | 10 - 20 % | $\sim$53 % |

Im Jahresmittel liegt der Wirkungsgrad dieser selektiv absorbierenden Schicht um 15 bis 20 % über dem einer schwarzlackierten Oberfläche. Es ist daher ohne weiteres ersichtlich, daß für die Ausnutzung der Solarenergie selektiv absorbierende Oberflächenschichten mit hohem Wirkungsgrad erhebliche Vorteile mit sich bringen.

Für die technische Anwendung derartiger Oberflächenschichten sind neben einem hohen Absorptionskoeffizienten $\alpha$ und einem niedrigen Emissionskoeffizienten $\varepsilon$ selbstverständlich noch weitere Gesichtspunkte maßgebend. Im Rahmen des BMFT-Vorhabens ET 4051/2 sind verschiedene selektive Absorberschichten untersucht und bewertet worden. Der zugehörige Bericht wird in der Reihe "Technische Berichte des BMFT" im Laufe des Jahres 1981 veröffentlicht. Die hier interessierenden Ergebnisse sind in Tabelle 2 zusammengestellt.

TABELLE 2

| Schicht | Kosten DM/m$^2$ | α/ε-Wert | Beständigkeit | | Verfüg-barkeit |
|---|---|---|---|---|---|
| | | | Temp. | Korros. | |
| Schwarzchrom | +[1] | +[1] | + | (+) | +[1] |
| Schwarznickel | (+) | (+) | - | - | - |
| Tabor | +[1] | - | - | - | +[1] |
| Kobaltoxid | (+) | + | + | - | - |
| Kupferoxidstruktur | + | - | + | ? | - |
| Wolframdendriten | - | + | + | ? | - |
| Emaille | (+) | (+) | + | ++ | +[1] |
| Nickelfolie | (+) | - | (+) | + | + |
| Nickelstruktur | + | + | + | (+) | + |

1) gilt nicht für Al als Substrat
+   gut
-   schlecht
(+) mittel

Daraus ist ersichtlich, daß lediglich Email und Nickelfolie eine gute Korrosionsbeständigkeit aufweisen. Email ist auf Solarabsorbern aus Aluminium oder Aluminiumlegierungen aber nicht zu realisieren und wurde außerdem hinsichtlich Kosten und α/ε-Wert nur mittelmäßig bewertet. Nickelfolie ist im α/ε-Wert schlecht und nach Kosten und Temperaturbeständigkeit nur mittelmäßig. Aus der Tabelle ist weiterhin zu ersehen, daß die mit "Nickelstruktur" bezeichnete selektive Absorberschicht, die nach dem Verfahren der DE-AS 26 16 662 hergestellt wurde, bis auf die Rubrik Korrosionsbeständigkeit in allen Fällen mit gut beurteilt worden ist. Im Gegensatz zu den üblichen, etwa 20 µm dicken Eloxalschichten, ist die selektiv absorbierende Nickelstruktur nur etwa

1 bis 2 μm dick und daher als gleichzeitiger Korrosionsschutz nicht geeignet. Die Korrosionsgefährdung bei Solarabsorbern ergibt sich aus Schwitzwasser in Verbindung mit aggressiven Bestandteilen der Atmosphäre, wie z.B. $SO_2$. Üblicherweise versucht man der Korrosionsgefahr dadurch zu begegnen, daß die Solarabsorber in ein gasdichtes Gehäuse mit Glasabdeckung eingebaut werden, wobei - wie bei Doppelglasscheiben - zur Abbindung von Schwitzwasser zusätzlich in dem Gehäuse hygroskopisches Material angeordnet wird. Derartige Konstruktionen sind sehr aufwendig, weil die unterschiedliche Wärmedehnung der einzelnen Bauteile berücksichtigt und eine dauerhafte Abdichtung gegen die Atmosphäre gewährleistet werden muß.

Es besteht somit die Aufgabe, die selektiv absorbierenden Oberflächenschichten von Solarabsorbern auf andere Weise gegen Korrosion zu schützen, wobei selbstverständlich deren Wirksamkeit nicht beeinträchtigt werden darf.

Überraschenderweise hat sich herausgestellt, daß diese Aufgabe gelöst werden kann, wenn auf einer selektiv absorbierenden Oberflächenschicht eine Korrosions-Schutzschicht aus Polytetrafluoräthylen (PTFE) aufgebracht ist.

In weiterer Ausbildung der Erfindung ist vorgesehen, daß die Korrosionsschutzschicht 1 bis 6 μm dick ist. Der Solarabsorber, auf dem die Schutzschicht aufzubringen ist, besteht zweckmäßigerweise aus einem Kanalblech, vorzugsweise aus einem Kanalblech aus Aluminium oder einer Aluminiumlegierung. Ein derartiger Solarabsorber weist in einer bevorzugten Ausführungsform eine selektiv-absorbierende Oberflächenschicht auf, die aus einer anodisch erzeugten dünnen Oxidschicht mit gleichmäßig verteiltem Porenraster besteht, wobei in den Poren galvanisch erzeugte metallische Stäbchen vorhanden sind und wobei auf dieser Oberflächenschicht eine Korrosions-Schutzschicht aus PTFE vorhanden ist. Die Oxidschichtdicke beträgt zweckmäßigerweise etwa 1 $\mu$m, während die Poren einen Durchmesser von 0,1 bis 0,5 $\mu$m und untereinander im Mittel gleichmäßige Abstände im Bereich von 0,1 bis 1 $\mu$m aufweisen. Die hierauf aufgebrachte Korrosions-Schutzschicht soll eine Dicke von 2 bis 5 $\mu$m haben.

Ein Verfahren zur Herstellung einer Korrosions-Schutzschicht auf einem Solarabsorber mit selektiv absorbierender Oberflächenschicht besteht darin, daß eine Suspension von PTFE in Wasser auf die selektiv-absorbierende Oberflächenschicht des Solarabsorbers aufgebracht, 5 bis 20 Minuten bei etwa 90°C getrocknet und dann 5 bis 20 Minuten bei 370 bis 400°C eingebrannt wird. Zweckmäßigerweise wird eine Suspension von 2,5 bis 15 % PTFE in Wasser verwendet.

Zur Herstellung eines Solarabsorbers aus einem Aluminiumgrundkörper mit selektiv absorbierender Oberflächenschicht und Korrosions-Schutzschicht, geht man zweckmäßigerweise so vor, daß zunächst mittels eines Anodisierungsverfahrens eine dünne Oxidschicht mit einem gleichmäßig auf der Oberfläche verteilten Porenraster erzeugt wird und in diese Poren mittels eines galvanischen Verfahrens metallische Stäbchen erzeugt werden und daß unmittelbar nach dem Spülen mit Wasser eine Suspension von 2,5 bis 15 % PTFE in Wasser aufgebracht, 5 bis 20 Minuten bei etwa 90°C getrocknet, 5 bis 20 Minuten bei 370 bis 400°C eingebrannt und schließlich langsam abgekühlt wird. Besonders vorteilhaft ist es, wenn eine Oxidschicht mit einer Dicke von etwa 1 μm, einem Porendurchmesser von 0,1 bis 0,5 μm und einem mittleren Porenabstand im Bereich von 0,1 bis 1 μm aufgebracht wird, daß dann metallische Stäbchen erzeugt werden, die mindestens 1 μm lang sind und daß schließlich eine Korrosions-Schutzschicht aufgebracht wird, die im eingebrannten Zustand eine Dicke von 2 bis 5 μm aufweist.

Aus Prospekten der Firma Dow Corning ist unter der Bezeichnung Vestar (R) Q9-6503 eine Schutzbeschichtung für Nichteisenmetalle bekanntgeworden, die unter anderem auch für Solarabsorber geeignet sein soll. Das Produkt wird als streich- und sprühfähige Lösung angeboten und enthält neben anderen, nicht genannten Bestandteilen Siliziumoxid und Methanol. Es erfordert einen sauberen Untergrund und ist in einer solchen Menge aufzutragen, daß nach dem Trocknen (5 bis 10 Minuten an staubfreier Luft) und Härten (2 bis 180 Minuten bei 250 bis 125°C) ein Schutzfilm von 5 bis 12 μm Dicke vorhanden ist. Der Schutzfilm soll abriebfest, witterungsbeständig und lichtdurchlässig sein.

Diese bekannte Schutzbeschichtung weist allerdings eine Reihe von Nachteilen auf und ist insbesondere als Korrosionsschutz für selektiv absorbierende Oberflächenschichten kaum geeignet. Die Forderung nach einer absolut sauberen, also auch vollkommen trocknen Oberfläche, ist beispielsweise bei einer selektiv-absorbierenden Oberflächens-chicht gemäß DE-OS 26 16 662 nur sehr schwer zu realisieren, weil das Verfahren eine abschliessende Spülung erfordert, so daß vor dem Auftrag von Vestar (R) zunächst noch sorgfältig getrocknet werden muß. Da die Lösung giftig wirkendes Methanol enthält, müssen zudem besondere Schutzmaßnahmen beim Aufbringen, Trocknen und Härten, ergriffen werden. Ferner eignet sich diese bekannte Schutzbeschichtung nicht für flexible Substrate oder solche, die nachträglich verformt werden müssen. Dies wird man bei Solarabsorbern in aller Regel zwar vermeiden können, nicht aber, daß die fertig beschichteten Solarabsorber beim Transport und bei der Montage gewisse elastische Verformungen erfahren, wodurch zumindest die Gefahr besteht, daß die Schutzbeschichtung beschädigt wird.

Der Hauptnachteil der Vestar (R)-Schutzbeschichtung besteht aber darin, daß - bei etwa gleichbleibendem Absorptionsverhalten - das Emissionsverhalten einer selektiv-absorbierenden Oberflächenschicht ganz erheblich verschlechtert wird.

In Figur 1 ist die Änderung $\Delta\varepsilon = \varepsilon_1 - \varepsilon_0$ ($\varepsilon_1$ = mit -, $\varepsilon_0$ = ohne Schutzschicht) einer $\alpha/\varepsilon$ -Schicht gemäß DE-OS 26 16 662 in Abhängigkeit von der Dicke der Schutzbeschichtung für Vestar (R) und PTFE aufgetragen. Während sich $\Delta\varepsilon$ bei PTFE je nach Dicke der Beschichtung im Bereich von 0,5 bis 4 $\mu$m um 0,02 bis 0,15 ändert, liegt die Änderung für $\Delta\varepsilon$ bei Vestar (R) je nach Dicke im Bereich von 4 bis 10 $\mu$m bei 0,48 bis 0,55. Mit anderen Worten, der $\varepsilon$ -Wert ändert sich bei einem Ausgangswert $\varepsilon_0$ = 10 % bei PTFE auf 12 bis 25 %, während er sich bei Vestar (R) vom Ausgangswert 10 % auf 58 bis 65 % verschlechtert. Im letztgenannten Fall ist der $\varepsilon$ -Wert also sogar schlechter, als der einer unbehandelten, nur teilselektiven Oberflächenschicht (vergl. Tabelle 1). Mit Vestar (R) kann der angestrebte Korrosionsschutz einer $\alpha/\varepsilon$ -Schicht von Solarabsorbern daher nur dann erreicht werden, wenn auf niedrige $\varepsilon$ -Werte verzichtet wird.

Demgegenüber ist die erfindungsgemäße Korrosions-Schutzschicht aus PTFE wesentlich einfacher herzustellen. Das in Wasser suspendierte PTFE kann unmittelbar nach dem letzten Arbeitsgang bei der Herstellung der $\alpha/\mathcal{E}$-Schicht, d.h. ohne vorherige Trocknung, aufgebracht werden. Es sind keine Schutzmaßnahmen gegen giftige Lösungsmittel erforderlich und die Schicht weist nach dem Einbrennen auch eine ausreichende Elastizität auf, so daß Beschädigungen beim Transport und bei der Montage nicht zu befürchten sind. Da PTFE im allgemeinen nicht durchsichtig ist, überrascht vor allem, daß es in einer Schichtdicke von 2 bis 5 $\mu$m offenbar völlig lichtdurchlässig ist, keine Verschlechterung des $\alpha$-Wertes bewirkt und die Erhöhung des $\mathcal{E}$-Wertes nur sehr gering und praktisch ohne nennenswerten Einfluß auf den Wirkungsgrad der $\alpha/\mathcal{E}$-Schicht ist. Es war auch nicht zu erwarten gewesen, daß bei den für das Einbrennen der PTFE-Schicht erforderlichen, verhältnismäßig hohen Temperaturen von 370 bis 400°C keine negative Veränderung der $\alpha/\mathcal{E}$-Schicht eintritt.

Erfindungsgemäß mit einer PTFE-Schutzschicht von 4 $\mu$m versehene Solarabsorber mit $\alpha/\mathcal{E}$-Schicht gemäß DE-OS 26 16 662, wurden sowohl einem Salzsprühtest nach DIN 50021 als auch einem Schwitzwasser/$SO_2$-Test nach DIN 50018 - SFW 2,0 S unterworfen. Hierbei handelt es sich um Tests mit gegenüber der normalen Beanspruchung erheblich verschärften Bedingungen, zur Feststellung des Korrosionsverhaltens im Kurzzeitversuch. Ungeschützte $\alpha/\mathcal{E}$-Schichten werden bei diesen Tests durch Lochfraß zerstört bzw. vollständig aufgelöst. Die geschützten Oberflächenschichten haben dagegen den Salzsprühtest 30 Tage und zwei Zyklen des Schwitzwasser-$SO_2$-Tests überstanden, ohne daß irgendein Korrosionsangriff festzustellen war.

Es wird somit eine einfach herzustellende, sehr
wirtschaftliche und effektive Korrosions-Schutzschicht für selektiv-absorbierende Oberflächenschichten von Solarkollektoren vorgeschlagen.

- 10 -
Patentansprüche

PATENTANSPRÜCHE

1. Solarabsorber mit selektiv-absorbierender Oberflächenschicht, dadurch gekennzeichnet, daß er
   eine Korrosions-Schutzschicht aus Polytetrafluoräthylen (PTFE) aufweist.

2. Solarabsorber nach Anspruch 1, dadurch gekennzeichnet, daß die Korrosions-Schutzschicht 1 bis
   6 µm dick ist.

3. Solarabsorber nach Anspruch 1 oder 2, dadurch
   gekennzeichnet, daß er aus einem Kanalblech besteht.

4. Solarabsorber nach Anspruch 3, dadurch gekennzeichnet, daß er aus einem Kanalblech aus Aluminium
   oder einer Aluminiumlegierung besteht.

5. Solarabsorber nach Anspruch 4, dadurch gekennzeichnet, daß er eine selektiv-absorbierende Oberflächenschicht aufweist, die aus einer anodisch
   erzeugten dünnen Oxidschicht mit gleichmäßig verteiltem Porenraster besteht, wobei in den Poren
   galvanisch erzeugte metallische Stäbchen vorhanden
   sind, und daß auf dieser Oberflächenschicht eine
   Korrosions-Schutzschicht aus PTFE vorhanden ist.

6. Solarabsorber nach Anspruch 5, dadurch gekennzeichnet, daß die Oxidschichtdicke etwa 1 µm beträgt, daß die Poren einen Durchmesser von 0,1 bis
   0,5 µm und untereinander im Mittel gleichmäßige Abstände im Bereich 0,1 bis 1 µm aufweisen.

7. Solarabsorber nach Anspruch 6, dadurch gekennzeichnet, daß die Korrosions-Schutzschicht
2 bis 5 µm dick ist.

8. Verfahren zur Herstellung einer Korrosions-Schutzschicht auf einem Solarabsorber mit selektiv-absorbierender Oberflächenschicht, dadurch gekennzeichnet, daß eine Suspension von PTFE in Wasser
auf die selektiv-absorbierende Oberflächenschicht
des Solarabsorbers aufgebracht, 5 bis 20 Minuten
bei etwa 90°C getrocknet und dann 5 bis 20 Minuten
bei 370 bis 400°C eingebrannt wird.

9. Verfahren nach Anspruch 8, dadurch gekennzeichnet,
daß eine Suspension von 2,5 bis 15 % PTFE in Wasser
verwendet wird.

10. Verfahren zur Herstellung eines Solarabsorbers aus
einem Aluminium-Grundkörper mit selektiv-absorbierender Oberflächenschicht und Korrosions-Schutzschicht, dadurch gekennzeichnet, daß zunächst
mittels eines Anodisierungsverfahrens eine dünne
Oxidschicht mit einem gleichmäßig auf der Oberfläche
verteilten Porenraster erzeugt wird und in diese
Poren mittels eines galvanischen Verfahrens metallische
Stäbchen erzeugt werden und daß unmittelbar nach
dem Spülen mit Wasser eine Suspension von 2,5 bis
15 % PTFE in Wasser aufgebracht, 5 bis 20 Minuten
bei etwa 90°C getrocknet, 5 bis 20 Minuten bei 370
bis 400°C eingebrannt und schließlich langsam abgekühlt wird.

11. Verfahren nach Anspruch 10, dadurch gekennzeichnet,
daß eine Oxidschicht mit einer Dicke von etwa 1 µm,
einem Porendurchmesser von 0,1 bis 0,5 µm und einem
mittleren Porenabstand im Bereich von 0,1 bis 1 µm aufgebracht wird, daß dann metallische Stäbchen erzeugt werden, die mindestens 1 µm lang sind und daß schließlich eine Korrosions-Schutzschicht aufgebracht wird, die im eingebrannten Zustand eine Dicke von 2 bis 5 µm aufweist.

Fig.1

## 0059492
Nummer der Anmeldung

EUROPÄISCHES RECHERCHENBERICHT

Europäisches Patentamt

EP 82 20 0128

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 433 162 (MULLER) * Ansprüche 1-10 * | 1 | F 24 J 3/02 C 25 D 11/18 |
| Y,D | DE-B-2 616 662 (DORNIER) * Insgesamt * | 3-6 | |
| Y | FR-A-2 409 468 (GRANGES ALUMINIUM) * Ansprüche 1-9 * | 3-6 | |
| Y | FR-A-2 300 823 (SUMITOMO) * Beispiel 1; Ansprüche 1-15 * | 2,7,8 | |
| A | DE-A-2 220 818 (HONNY CHEMICALS) | 9 | |

| | | | RECHERCHIERTE SACHGEBIETE (Int. Cl. 3) |
|---|---|---|---|
| Y | US-A-3 574 071 (COVINO) * Ansprüche 1-16 * | 9 | |
| X | CHEMICAL ABSTRACTS, Band 91, Nr. 26, 24. Dezember 1979, Seite 142, Nr. 213783y, Columbus, Ohio, USA J.D. BRODER et al.: "Ultraviolet irradiation at elevated temperatures and thermal cycling in vacuum of FEP-A covered silicon solar cells" & CONF. REC. IEEE PHOTOVOLTAIC SPEC. CONF. 1978, 13, 122-126 * Zusammenfassung * | 1 | C 25 D 11/18 C 25 D 11/20 F 24 J 3/02 |

Der vorliegende Recherchenbericht wurde für alle Patentansprüche erstellt.

| Recherchenort DEN HAAG | Abschlußdatum der Recherche 17-06-1982 | Prüfer VAN LEEUWEN R.H. |
|---|---|---|

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | CHEMICAL ABSTRACTS, Band 85, Nr. 24, 13. Dezember 1976, Seite 147, Nr. 180049j, Columbus, Ohio, USA J.D. BRODER: "Comparison of type A and C fluorinated ethylene propylene (FEP) as cover materials for silicon solar cells" & SCI. TECH. AEROSP. REP. 1976, 14(10) * Zusammenfassung * | 1 | |
| | ----- | | |
| | | | RECHERCHIERTE SACHGEBIETE (Int. Cl. 3) |

Der vorliegende Recherchenbericht wurde für alle Patentansprüche erstellt.

| Recherchenort DEN HAAG | Abschlußdatum der Recherche 17-06-1982 | Prüfer VAN LEEUWEN R.H. |
|---|---|---|